(19) Europäisches Patentamt
European Patent Office
Office européen des brevets

(11) **EP 2 218 208 B1**

(12) **FASCICULE DE BREVET EUROPEEN**

(45) Date de publication et mention
de la délivrance du brevet:
**15.06.2011 Bulletin 2011/24**

(21) Numéro de dépôt: **07871853.3**

(22) Date de dépôt: **13.12.2007**

(51) Int Cl.:
***H04L 9/06*** *(2006.01)*

(86) Numéro de dépôt international:
**PCT/FR2007/002061**

(87) Numéro de publication internationale:
**WO 2009/074726 (18.06.2009 Gazette 2009/25)**

(54) **PROCEDE DE TRAITEMENT CRYPTOGRAPHIQUE DE DONNEES, NOTAMMENT A L'AIDE D'UNE BOITE S, DISPOSITIF ET PROGRAMME ASSOCIES**

VERFAHREN FÜR KRYPTOGRAFISCHE DATENVERARBEITUNG, INSBESONDERE UNTER VERWENDUNG EINER S BOX UND DIESBEZÜGLICHE EINRICHTUNG UND SOFTWARE

METHOD FOR CRYPTOGRAPHIC DATA PROCESSING, PARTICULARLY USING AN S BOX, AND RELATED DEVICE AND SOFTWARE

(84) Etats contractants désignés:
**AT BE BG CH CY CZ DE DK EE ES FI FR GB GR HU IE IS IT LI LT LU LV MC MT NL PL PT RO SE SI SK TR**

(43) Date de publication de la demande:
**18.08.2010 Bulletin 2010/33**

(73) Titulaire: **Oberthur Technologies**
**92300 Levallois Perret (FR)**

(72) Inventeurs:
• **RIVAIN, Matthieu**
**F-75017 Paris (FR)**

• **PROUFF, Emmanuel**
**F-75018 Paris (FR)**

(74) Mandataire: **Bonnans, Arnaud**
**Santarelli,**
**14 avenue de la Grande Armée,**
**BP 237**
**75822 Paris Cedex 17 (FR)**

(56) Documents cités:
**EP-A- 1 601 132         EP-A- 1 833 190**
**WO-A-2007/116140**

**Description**

L'invention concerne un procédé de traitement cryptographique de données, ainsi qu'un dispositif et un programme associés.

Dans de tels procédés, on a fréquemment recours au masquage des données afin de lutter contre les attaques, par exemple du type analyse de courant (notamment les attaques de type DPA ainsi dénommées d'après l'anglais *"Differential Power Analysis"*) ou du type analyse de rayonnement électromagnétique.

Les techniques de masquage consistent à combiner la donnée (c'est-à-dire en pratique le nombre) que l'on souhaite utiliser (en pratique, auquel on souhaite faire subir une opération) avec un nombre imprévisible pour un attaquant extérieur (en général un nombre aléatoire ou pseudo-aléatoire); ainsi, les valeurs impliquée sont chaque fois différentes même en utilisant une donnée constante en entré, ce qui rend impossible pour l'attaquant de déduire les données internes du procédé (et notamment les clés cryptographiques qu'il utilise) à partir de mesures faites de l'extérieur.

Une part de la sécurité cryptographique est obtenue par l'utilisation de fonctions non-linéaires. Par exemple, il est courant de modéliser un chiffrement par bloc (*block cipher*) par la combinaison de fonctions affines et de fonctions non-linéaires. Les réalisations de telles fonctions non-linéaires sont particulièrement difficiles à protéger par masquage, du fait de la non-linéarité par rapport à l'opération de masquage.

Un exemple de procédé de traitement cryptographique est décrit par la demande de brevet internationale WO 2007/116140 qui met en oeuvre une fonction non-linéaire de type boîte-S ("*S-Box*" selon la terminologie anglo-saxonne spécialisée du domaine considéré) appliquée à ces données masquées.

De telles boîtes-S ou "*S-Boxes*" sont réalisées en pratique au moyen d'une table de correspondance (fréquemment dénommée table-S ou "*look-up table*" [LUT] dans ce même domaine) mémorisée dans le dispositif cryptographique.

La solution proposée dans ce document peut toutefois ne pas convenir lorsque l'on souhaite éviter la mise en oeuvre d'un nombre important de sommations.

Dans ce contexte, l'invention prévoit un procédé de traitement cryptographique de données représentées sous forme numérique, le procédé étant mis en oeuvre par une entité électronique et comprenant une transformation d'une donnée d'entrée, masquée par un masque d'entrée, en une donnée de sortie, ladite transformation mettant en oeuvre une table de conversion, caractérisé par les étapes suivantes :

- pour au moins une pluralité de valeurs possibles pour le masque d'entrée, transfert de la valeur de sortie de la table de conversion correspondant à la donnée d'entrée masquée transformée par application d'une opération de démasquage au moyen de la valeur possible, dans un tableau à une position correspondant à une valeur déterminée masquée par le masque d'entrée et transformée par application de l'opération de démasquage au moyen de la valeur possible;
- détermination de la donnée de sortie au moyen de la donnée située dans le tableau à la position correspondant à la valeur déterminée.

On réorganise ainsi une partie au moins de la table de conversion dans le tableau de telle sorte que la valeur de sortie recherchée (qui correspond dans cette table de conversion à la valeur d'entrée sans masquage) est placée (avec masquage éventuel) dans le tableau à la position définie par la valeur déterminée.

Toutefois, du fait que l'on traite une pluralité de valeurs possibles pour le masque et que la réorganisation effectuée dépend au mois du masque d'entrée, le procédé est protégé contre les attaques.

La table de conversion définit par exemple en pratique une fonction non linéaire, telle que celle impliquée au sein d'une boîte-S.

Le masque d'entrée peut être un masque du premier ordre, par exemple l'application d'une valeur aléatoire, ou un masque du second ordre, correspondant à l'application successive d'une première puis d'une seconde valeur aléatoire. Dans ce cas, la valeur déterminée peut être masquée par le masque d'entrée au moyen des étapes suivantes :

- masquage par un premier élément de masque;
- masquage par un second élément de masque.

Afin d'améliorer la sécurité en sortie de la table de conversion, l'étape de transfert peut comprendre le masquage de la valeur transférée par un masque de sortie, éventuellement différent du masque d'entrée, par exemple au moyen d'un masquage du premier ou du second ordre.

Dans ce dernier cas, l'application du masque de sortie peut être réalisée au moyen des étapes suivantes :

- masquage par une première valeur aléatoire;
- masquage par une seconde valeur aléatoire.

Selon une forme de réalisation décrite dans la suite, l'étape de transfert est réalisée pour l'ensemble des valeurs possibles pour le masque d'entrée, ce qui permet de ne faire apparaître vers l'extérieur aucune valeur privilégiée et donc aucune fuite d'information à ce niveau.

Par ailleurs, la valeur déterminée (définissant comme vu ci-dessus la position d'intérêt dans le tableau) peut être une valeur prédéterminée (par exemple par souci de simplification) ou une valeur obtenue par tirage aléatoire, ce qui améliore encore la sécurité puisque la position intéressante dans le tableau varie dans ce cas à chaque mise en oeuvre.

L'entité électronique est apte à manipuler les données numériques traitées, par exemple au moyen d'un microprocesseur.

Le procédé est, par exemple, un procédé de chiffrage ou de déchiffrage de données numériques, représentant en général un message, mais également potentiellement une clé cryptographique, une donnée intermédiaire, ou une partie seulement de tels éléments.

En pratique on utilisera des masques binaires de même longueur que la donnée d'entrée binaire. Ainsi l'ensemble des masques binaires correspond à l'ensemble des entrées de la boîte-S (table-S).

Les masques binaires associés à une fonction d'addition booléenne ont l'avantage de constituer une fonction de masquage involutive simple, permettant de retrouver la valeur de donnée d'entrée lorsque celle-ci est masquée deux fois par le même masque.

L'invention s'applique ainsi à tout ordre de masquage, c'est-à-dire quel que soit le nombre de masques aléatoires appliquées à la donnée.

En particulier, la fonction de masquage peut être commutative, ce qui permet d'appréhender le double (voire plus) masquage quelque soit l'ordre d'application des masques d'entrée ou de sortie comme mentionné plus loin.

Selon un mode de réalisation particulièrement intéressant, lesdits masques peuvent être des masques additifs, par exemple des masques booléens. Ainsi, on peut mettre en oeuvre aisément l'addition booléenne à l'aide de fonctions OU EXCLUSIF (XOR).

Selon un mode de réalisation utilisant un mot machin de grande longueur et regroupant plusieurs sous-mots de sortie, ladite donnée située dans le tableau est un mot comprend une pluralité de sous-mots de sortie et la détermination de la donnée de sortie peut alors comprendre une étape d'accès à la donnée de sortie parmi les sous-mots au moyen d'une partie de la donnée d'entrée et d'une partie du masque d'entrée.

Dans ce contexte, l'étape d'accès à la donnée de sortie dans ledit mot comprend par exemple :

> i) une étape de séparation dudit mot en deux moitiés respectivement des bits les plus significatifs et des bits les moins significatifs,
> ii) une étape de sélection d'une desdites moitiés dudit mot en fonction des valeurs des bits d'un même index dans respectivement la partie de la donnée d'entrée et la partie du masque d'entrée.

Le procédé est par exemple mis en oeuvre par une séquence d'instructions mémorisées dans l'entité électronique et exécutées par un microprocesseur de l'entité électronique.

L'entité électronique peut être en pratique une carte à microcircuit, particulièrement adaptée à ce type d'opérations sécurisées.

L'invention propose également un dispositif électronique de traitement cryptographique de données représentées sous forme numérique apte à réaliser une transformation d'une donnée d'entrée, masquée par un masque d'entrée, en une donnée de sortie au moyen d'une table de conversion, caractérisé par :

- des moyens pour transférer, pour au moins une pluralité de valeurs possibles pour le masque d'entrée, la valeur de sortie de la table de conversion correspondant à la donnée d'entrée masquée transformée par application d'une opération de démasquage au moyen de la valeur possible, dans un tableau à une position correspondant à une valeur déterminée masquée par le masque d'entrée et transformée par application de l'opération de démasquage au moyen de la valeur possible ;
- des moyens pour déterminer la donnée de sortie au moyen de la donnée située dans le tableau à la position correspondant à la valeur déterminée.

Ce dispositif peut également inclure des caractéristiques correspondant aux modes de réalisation envisagés ci-dessus pour le procédé.

L'invention propose enfin un produit programme d'ordinateur comprenant une suite d'instructions aptes, lorsqu'elles sont exécutées par un microprocesseur, à mettre en oeuvre le procédé évoqué ci-dessus.

Les avantages, buts et caractéristiques particulières de ce dispositif électronique et de ce produit programme d'ordinateur étant similaires à ceux du procédé également objet de la présente invention, telle que succinctement exposée ci-dessus, ils ne sont pas rappelés ici.

D'autres avantages, buts et caractéristiques particulières de la présente invention ressortiront de la description qui va suivre, faite, dans un but explicatif et nullement limitatif en regard des dessins annexés, dans lesquels:

- la **figure 1** représente schématiquement les éléments principaux d'une forme de réalisation possible pour une carte à microcircuit ;
- la **figure 2** représente l'allure physique générale de la carte à microcircuit de la **figure 1** ;
- la **figure 3** représente, sous forme de logigramme, les étapes essentielles d'un chiffrement selon l'algorithme AES avec masquage ;
- la **figure 4** représente, sous forme de logigramme, un premier mode de réalisation de l'invention mis en oeuvre dans le procédé de la figure 3;
- la **figure 5** représente, sous forme de logigramme, un deuxième mode de réalisation de l'invention mis en oeuvre dans le procédé de la figure 3;
- la **figure 6** représente, sous forme de logigramme, un troisième mode de réalisation de l'invention mis en oeuvre dans le procédé de la figure 3;
- les **figures 7** et **8** illustrent un exemple de mise en oeuvre des tables-S utilisées dans les modes de réalisations des **figures 4 à 6**;
- la **figure 9** représente, sous forme de logigramme, un premier mode de réalisation pour l'accès à un sous-mot d'un mot binaire, par exemple stocké dans la table-S de la **figure 8**;
- la **figure 10** représente, sous forme de logigramme, un deuxième mode de réalisation pour l'accès à un sous-mot d'un mot binaire, par exemple stocké dans la table-S **de la figure 8**; et
- la figure **11** représente, sous forme de logigramme, un troisième mode de réalisation pour l'accès à un sous-mot d'un mot binaire, par exemple stocké dans la table-S de **la figure 8**.

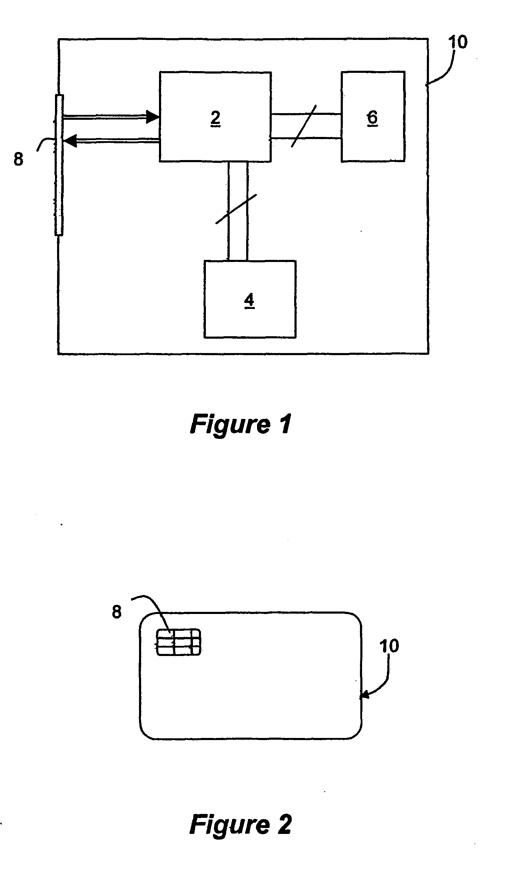

Un exemple d'entité électronique est une carte à microcircuit 10 dont les principaux éléments électroniques sont représentés à la **figure 1** et qui comporte un microprocesseur 2 relié d'une part à une mémoire vive (ou RAM de l'anglais *Random Access Memory*) 4 et d'autre part à une mémoire à semi-conducteur non-volatile réinscriptible 6, par exemple une mémoire morte effaçable et programmable électriquement (ou EEPROM de l'anglais *Electrically Erasable Programable Read Only Memory*). En variante, la mémoire non-volatile réinscriptible à semi-conducteur 6 pourrait être une mémoire flash.

Les mémoires 4, 6 sont reliées au microprocesseur 2 par un bus chacune sur la **figure 1** ; en variante, il pourrait s'agir d'un bus commun.

La carte à microcircuit 10 comporte également une interface 8 de communication avec un terminal utilisateur réalisée ici sous forme de contacts dont un assure par exemple une liaison bidirectionnelle avec le microprocesseur 2. L'interface 8 permet ainsi l'établissement d'une communication bidirectionnelle entre le microprocesseur 2 et le terminal utilisateur dans lequel la carte à microcircuit 10 sera insérée.

Ainsi, lors de l'insertion de la carte à microcircuit 10 dans un terminal utilisateur, le microprocesseur 2 va mettre en oeuvre un procédé de fonctionnement de la carte à microcircuit 10, selon un jeu d'instructions, stockées par exemple dans une mémoire morte (ou ROM de l'anglais *Read-Only Memory*) - non représentée - ou dans la mémoire réinscriptible 6, qui définit un programme d'ordinateur. Ce procédé inclut en général l'échange de données avec le terminal utilisateur *via* l'interface 8 et le traitement de données au sein de la carte à microcircuit 10, et précisément au sein du microprocesseur 2 avec utilisation éventuelle de données stockées dans la mémoire réinscriptible 6 et de données stockées temporairement dans la mémoire vive 4.

Des exemples de procédés qui mettent en oeuvre l'invention sont donnés dans la suite.

La **figure 2** représente l'allure physique générale de la carte à microcircuit 10 réalisée avec la forme générale d'un parallélépipède rectangle de très faible épaisseur.

L'interface de communication 8 pourvue des contacts déjà mentionnés apparaît clairement sur la face de la carte à microcircuit 10 visible sur la **figure 2,** sous forme d'un rectangle inscrit dans la face supérieure de la carte à microcircuit **10**.

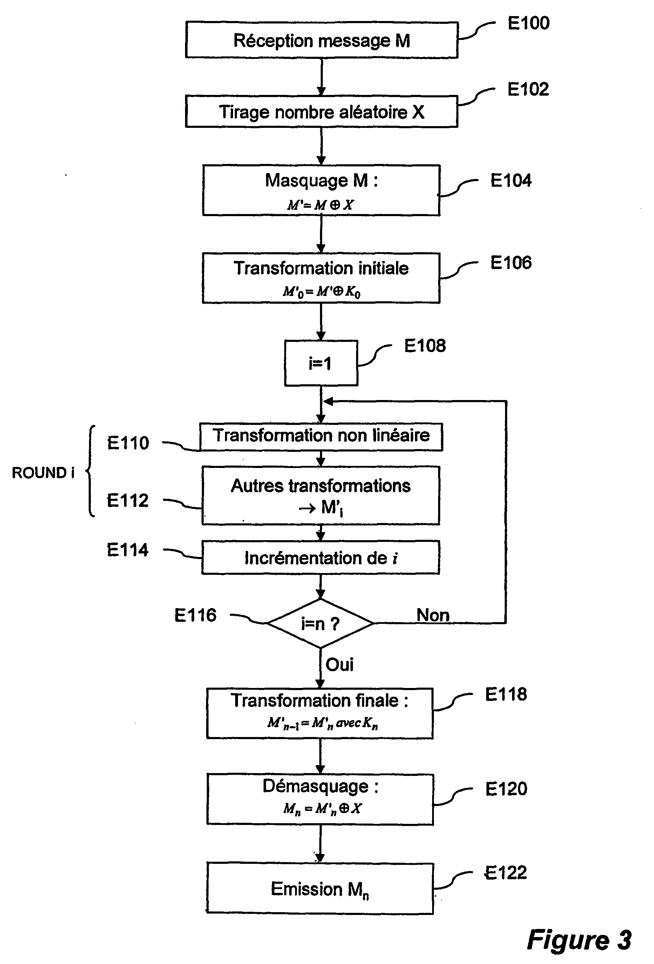

On décrit maintenant des exemples de réalisation de l'invention en référence à un algorithme cryptographique de type AES ("*Advanced Encryption Standard'* selon la terminologie anglo-saxonne) représenté synthétiquement sur **la figure 3**.

Il est néanmoins entendu que l'invention peut par exemple être appliquée dans le cas d'autres algorithmes impliquant une fonction non-linéaire, tel l'algorithme DES, avec par exemple l'utilisation de blocs de chiffrement (également connus sous la terminologie *"block cipher"*). Le masque ou les masques appliqués à la donnée en entrée de la fonction non-linéaire ne sont d'ailleurs pas nécessairement le ou les masques X appliqués au début de l'algorithme, mais s'en déduisent en général facilement selon les mécanismes de algorithme, par exemple tel que mentionné dans la demande WO 2007/116140 susvisée.

La **figure 3** représente les étapes essentielles du procédé de chiffrement AES d'un mot M au sein de l'entité électronique.

Le mot M est en général une partie d'un message à chiffrer ayant par exemple une longueur de 128 bits. D'autres longueurs sont naturellement envisageable, telles que les longueurs de 192 bits et 256 bits fréquemment utilisées.

L'exemple décrit ici utilise comme entité électronique la carte à microcircuit décrite précédemment en référence aux **figures 1 et 2**, mais d'autres types d'entité électronique peuvent naturellement être utilisés, tels que par exemple un ordinateur personnel.

Pour ce faire, l'entité électronique mémorise, par exemple au sein de la mémoire non volatile 6, une clé cryptographique K à partir de laquelle sont dérivées des sous-clés $K_0$, ... $K_n$ au moyen d'une procédure d'expansion de clé.

L'obtention des sous-clés $K_0$, ... $K_n$ peut être réalisée selon des techniques connues et qui ne seront donc pas décrites en détail ici. On pourra se référer par exemple à la demande de brevet FAR 2 838 262.

On notera toutefois que l'invention, décrite dans la suite pour le calcul au niveau des boîtes-S (ou "*S-box*") impliquées à chaque itération (ou ROUND) de l'algorithme AES, pourrait être mise en oeuvre lors de l'application de la fonction non-linéaire utilisée dans l'algorithme de dérivation des sous-clés $K_0$, ... $K_n$.

Le procédé de chiffrement commence à l'étape E100 par la réception, par exemple à travers l'interface 8 de la carte à microcircuit, du mot (en général une partie de message) M à chiffrer.

On procède alors au sein de l'entité électronique au tirage d'un nombre aléatoire X utilisé comme masque du mot M au cours d'une étape E102. Bien que l'on utilise les termes "*nombre aléatoires*", il s'agit par exemple en pratique d'un nombre pseudo-aléatoire déterminé à l'intérieur du microprocesseur 2. De manière générale, le nombre X et toute donnée référencée ci-après comme aléatoire doit être un nombre non-prévisible de l'extérieur de l'entité électronique.

On procède alors au cours d'une étape E104 au masquage du mot M afin d'obtenir un mot masqué M' par combinaison du mot M et du nombre aléatoire X au moyen d'une opération de OU EXCLUSIF (fréquemment dénommée "*XOR*"): $M' = M \oplus X$.

Lorsqu'un simple masque est utilisé pour masquer une donnée (masquage d'ordre 1), la fuite d'information sur la donnée masquée peut-être ciblée conjointement avec la fuite d'information sur le masque afin de retrouver de l'information sur la donnée en clair. Ce type d'attaques couramment appelées attaques d'ordre 2 peut être évité par l'utilisation d'un second masque **(masquage d'ordre 2)**.

Ainsi en variante, ce peut être deux masques $X_1$ et $X_2$ qui sont générés pour doublement masquer le message M : $M' = (M \oplus X_1) \oplus X_2$. Cette configuration fournit une protection du message M au deuxième ordre de fuite. On décrira notamment par la suite un exemple de réalisation de l'invention impliquant ce double masquage.

On affectera dans la suite le symbole prime aux valeurs masquées (ici par exemple M') tandis que les grandeurs qui ne portent pas le symbole prime représentent les grandeurs correspondantes sans masquage, c'est-à-dire telles qu'elles auraient été obtenues au cours de l'algorithme AES réalisée sans masquage ; ces grandeurs sans masquage sont introduites ici à des fins explicatives, mais ne seront pas manipulées par le procédé décrit ici qui utilise leur version masquée, sauf naturellement pour les grandeurs M et $M_n$ utilisées respectivement en entrée et en sortie.

Il va à présent être procédé aux différentes étapes de l'algorithme AES en utilisant la donnée masquée M' selon les étapes décrites ci-dessous qui correspondent aux étapes classiques de l'algorithme AES adaptées pour tenir compte du masquage.

On procède ainsi tout d'abord à la transformation initiale au moyen de la sous-clé $K_0$ au cours d'une étape E106 en appliquant la clé $K_0$ à la donnée au moyen d'un opérateur OU EXCLUSIF: $M'_0 = M' \oplus K_0$.

Si on dénomme $M_0$ le résultat de la transformation initiale sans masquage ($M_0 = M \oplus K_0$), on peut remarquer que le résultat $M'_0$ de l'étape E106 peut s'écrire $M'_0 = M_0 \oplus X$. On remarque ainsi que le résultat de l'étape E106 correspond au résultat de la transformation initiale sans masquage, masqué par la valeur du masque X.

On procède après la transformation initiale à une étape E108 d'initialisation à 1 d'un indice i repérant dans la suite l'itération (ou ROUND) concernée.

A l'étape E110, on fait subir au mot masqué $M'_{i-1}$ obtenu à l'étape précédente (étape E106 après la transformation initiale ou itération précédente) une itération (ROUND) des étapes E110 et E112, afin d'obtenir un nouveau mot masqué $M'_1$.

Chaque itération peut être conçue pour que le résultat obtenu après l'itération $M'_i$, soit égal au résultat $M_i$ après l'itération i dans un algorithme sans masquage, masqué avec un masque X identique à celui introduit à l'étape E104, c'est-à-dire afin qu'après chaque itération, $M'_i = M_i \oplus X$.

En alternative, on peut prévoir que le masquage est modifié à chaque itération, par exemple en le remasquant avec un nouveau masque Z comme décrit dans la suite.

Une fois l'itération ou ROUND i réalisée, on incrémente la valeur de l'indice i au cours d'une étape E114, puis on teste au cours d'une étape E116 l'égalité i = n, où n est le nombre d'itérations plus un utilisées dans l'algorithme concerné (en général 10 itérations pour un mot de 128 bits).

Si la dernière itération n'a pas été atteinte (c'est-à-dire que l'égalité i = n n'est pas vérifiée), on retourne à l'étape E110 pour la mise en oeuvre de l'itération suivante.

Si en revanche la dernière itération est atteinte (c'est-à-dire lorsque l'on vérifie i = n), on procède à la transformation finale lors d'une étape E118, au cours de laquelle on obtient donc un mot $M'_n$ à partir du mot $M'_{n-1}$ précédemment obtenu, et ce avec utilisation de la sous-clé $K_n$ (étape E118).

Le résultat de la transformation finale $M'_n$ correspond ainsi au mot chiffré obtenu grâce à l'algorithme AES à partir du mot initial M, masqué avec le masque précédemment défini X (ou le dernier masque intermédiaire Z généré si l'on souhaite modifier le masquage au cours des itérations).

On procède alors à l'étape E120 au démasquage du mot obtenu à l'étape E118 afin d'obtenir le mot chiffré $M_n$ : $M_n = M'_n \oplus X$ (ou le cas échéant avec le masque Z).

Le mot chiffré $M_n$ peut alors être émis à l'extérieur de l'entité électronique au moyen de l'interface 8 au cours d'une étape E122 qui termine le procédé de chiffrage par l'entité électronique du mot M.

La présente invention porte plus précisément sur l'utilisation des SBox lors de l'itération des étapes E110 et E112.

Dans le domaine de la cryptographie, la transformation $M'_{i-1} \rightarrow M'_i$ peut être modélisée par la composition de trois opérations: une fonction additive de la clé dérivée $K_i$, une fonction non linéaire et une fonction linéaire.

L'étape E110 illustre l'application de la fonction non linéaire par l'utilisation d'une boîte-S et décrite plus en détail en référence aux modes de réalisation ci-après.

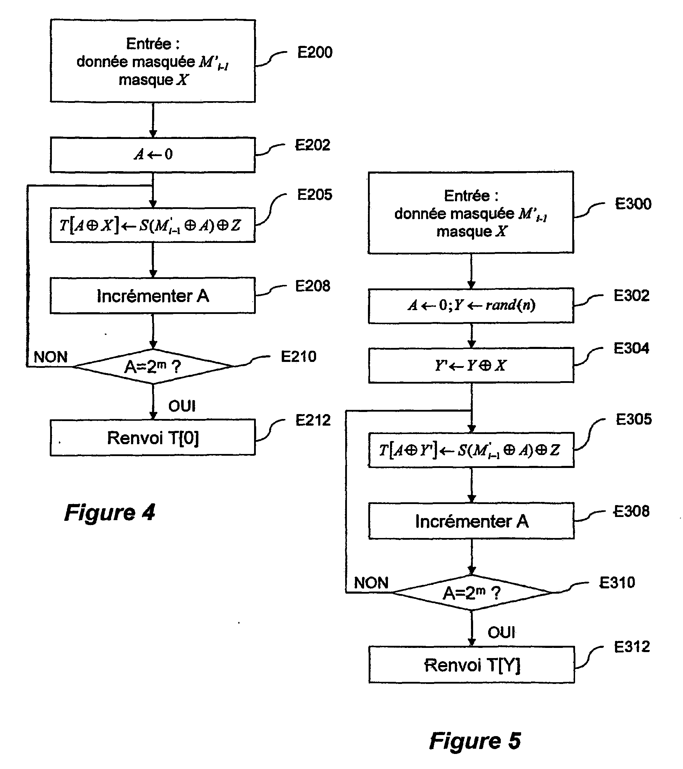

L'étape E112 correspond alors à l'application des deux autres fonctions dont un exemple est proposé dans la demande WO 2007/116140 susvisée en lien avec sa figure 4, notamment des étapes de décalage de bits de sous-blocs (également appelée étape de *Shift Row*), de multiplication par une matrice (étape appelée *Mix Column*) et d'addition de la clé $K_i$ (étape *Add Round Key*).

Pour la réalisation de l'étape E110, la table-S est stockée dans la mémoire non volatile 6, table également dénommée table de conversion (*look-up table* ou LUT). La table de conversion S reçoit des données d'entrée de dimension (c'est-à-dire de nombre de bits) *m* et fournit des données de sortie de dimension *n,* notamment *m* peut être égale à *n.* L'invention s'applique également dans le cas où ces deux dimensions sont différentes.

Un premier mode de réalisation de l'étape E110 va à présent être décrit en référence à la **figure 4**.

Sur cette figure, l'étape E110 est mise en oeuvre sous forme d'un sous-programme qui reçoit en entrée la donnée masquée $M'_{i-1}$ et le masque X utilisé pour le masquage (étape E200).

On initialise alors, par exemple à la valeur zéro, une variable A qui correspond comme on le verra dans la suite à une valeur possible pour le masque X (étape E202).

On entend par valeur possible l'une des valeurs qu'est susceptible de prendre le masque X dont on a vu qu'il constituait une valeur aléatoire.

On lit alors à l'étape E205 la valeur mémorisée dans la table de conversion S à la position définie par la donnée masquée $M'_{i-1}$ à laquelle on a au préalable appliqué (en vue de son démasquage éventuel) la variable A au moyen de l'opération $M'_{i-1} \oplus A$. On lit donc à l'étape E205 la valeur S $M'_{i-1} \oplus A$).

On remarque que, dans l'exemple décrit ici, l'algorithme utilisé pour le masquage comme celui utilisé pour le démasquage consistent à appliquer une opération de "*ou exclusif*" (ou somme booléenne), couramment utilisée dans ce but grâce aux propriétés involutives de cette fonction.

On procède, toujours à l'étape E205, à l'ajout d'un nouveau masque Z à la valeur qui vient d'être lue, puis on mémorise la valeur ainsi obtenue dans un tableau T à une position définie par la somme booléenne du masque X et de la variable A. Le tableau T est également mémorisé dans une mémoire de l'entité électronique, ici en général une mémoire vive à laquelle l'accès est simple et rapide.

Le nouveau masque Z utilisé est par exemple également reçu en entrée lors de l'étape E200. En variante, ce nouveau masque Z pourrait être déterminé, par exemple par tirage aléatoire, lors de l'étape d'initialisation susmentionnée E202, auquel cas il est retourné lors de l'étape E212 décrite plus bas. Selon une autre variante déjà mentionnée, on pourrait à nouveau utiliser le masque X à cette étape.

Lorsque la copie de la sortie de la table de conversion S définie ci-dessus dans le tableau T à la position également indiquée ci-dessus est réalisée, on incrémente la valeur de la variable A (étape E208).

On vérifie alors à l'étape E210 si la variable A a balayé l'ensemble des valeurs possibles pour le masque X (ici en comparant la valeur de A à $2^m$ puisque cette valeur a été initialisée à zéro lors de l'étape E202).

En cas de comparaison négative (c'est-à-dire si certaines valeurs possibles pour le masque X n'ont pas été traitées), on retourne à l'étape E205 pour une nouvelle itération de cette étape avec la nouvelle valeur de la variable A.

En revanche, si la comparaison est positive, la valeur A a successivement pris toutes les valeurs possibles pour le masque X et on peut alors retourner en tant que résultat de l'étape E110 la valeur T[0] (étape E212).

Le tableau T a en effet été rempli par les itérations successives de l'étape E205 de telle sorte que, lorsque la variable A a pris la valeur effective du masque X, on a lu dans la table de conversion S la valeur correspondant à l'entrée $M'_{i-1} \oplus X = M'_{i-1}$, soit la valeur $S(M_{i-1})$ que l'on cherchait à obtenir, et on a placé cette valeur (après masquage par le nouveau masque Z) dans le tableau T à la position $X \oplus X = 0$.

On a ainsi réorganisé la table de correspondance S dans le tableau T de telle sorte que la valeur d'intérêt (S

($M_{i-1}$)) soit mémorisée dans une position déterminée (ici la position correspondant à la valeur nulle). Toutefois, cette réorganisation a porté sur un ensemble de valeurs (ici l'ensemble de la table de conversion) ; la réorganisation effectuée dépend en outre du masque aléatoire X et sera donc différente à chaque fois.

L'ensemble de ces effets concourt à améliorer la sécurité de la mise en oeuvre de l'étape E110.

On remarque qu'on utilise ici le vocable "*tableau*" T bien que la structure de donnée concernée n'ait qu'une entrée, comme la table de conversion S.

On a représenté à la **figure 5** un second mode de réalisation envisageable pour l'étape E110.

Ce mode de réalisation s'apparente au premier mode décrit en référence à la figure **4** ; cependant, la réorganisation de la table de correspondance S en un tableau T est telle que la valeur d'intérêt dans la table de correspondance S ($S(M_{i-1})$) n'est pas recopiée (après masquage) à une position prédéterminée (la position correspondant à la valeur nulle dans la figure 4), mais à une position déterminée de manière aléatoire à chaque passage à l'étape E110 comme indiqué ci-dessous grâce à l'utilisation d'une nouvelle valeur aléatoire Y, ce qui améliore encore la sécurité.

Le procédé de la figure 5 commence par la réception en entrée de la donnée masquée $M'_{i-1}$ et du masque X (étape E300) comme pour le premier mode de réalisation décrit en référence à la figure 4.

On procède alors à l'initialisation de la variable A, par exemple à la valeur nulle, mais également ici à celle d'une variable Y par tirage aléatoire sur un nombre de bits m égal à celui du masque X (étape E302).

On calcule alors à l'étape E304 pour une simplification des calculs une valeur intermédiaire Y' égale au masquage de la valeur aléatoire Y qui vient d'être déterminée par le masque X reçu en entrée : $Y' = Y \oplus X$.

Comme pour le premier mode de réalisation, on procède alors à une boucle qui permet de donner à la variable A toutes les valeurs envisageables pour le masque X.

On commence cette boucle à l'étape E306 à laquelle on lit tout d'abord dans la table de conversion S la valeur de sortie correspondant en entrée à la donnée masquée $M'_{i-1}$ transformée par application de la variable A au moyen de l'opération de démasquage. On lit ainsi à l'étape E306 la valeur $S(M'_{i-1} \oplus A)$, valeur que l'on masque à l'aide d'un nouveau masque Z (qui peut être déterminée selon les différentes possibilités déjà envisagées pour le premier mode de réalisation).

La valeur lue et masquée est en suite recopiée dans un tableau T à une position définie par application à la valeur intermédiaire Y' de la variable A au moyen également de l'opération de démasquage, c'est-à-dire à la position $A \oplus Y'$.

On peut alors passer à l'étape E308 à laquelle on incrémente la valeur de A afin de tester à l'étape E310 si la valeur maximale $2^m$ a été atteinte : dans la négative, on boucle sur l'étape E306 ; dans l'affirmative, le traitement de l'ensemble des valeurs possibles pour la valeur A est terminé et on peut donc renvoyer en sortie à l'étape E312 la valeur recopiée dans le tableau à la position Y.

En effet, lorsque la copie de l'étape E306 a visé la position Y, c'est que la variable A a permis effectivement de démasquer le masquage de Y réalisé au moyen du masque X (étape E304), et c'est donc que cette même valeur A a permis de démasquer la donnée masquée $M'_{i-1}$ en la donnée $M_{i-1}$ dont on souhaite lire la sortie dans la table de conversion S.

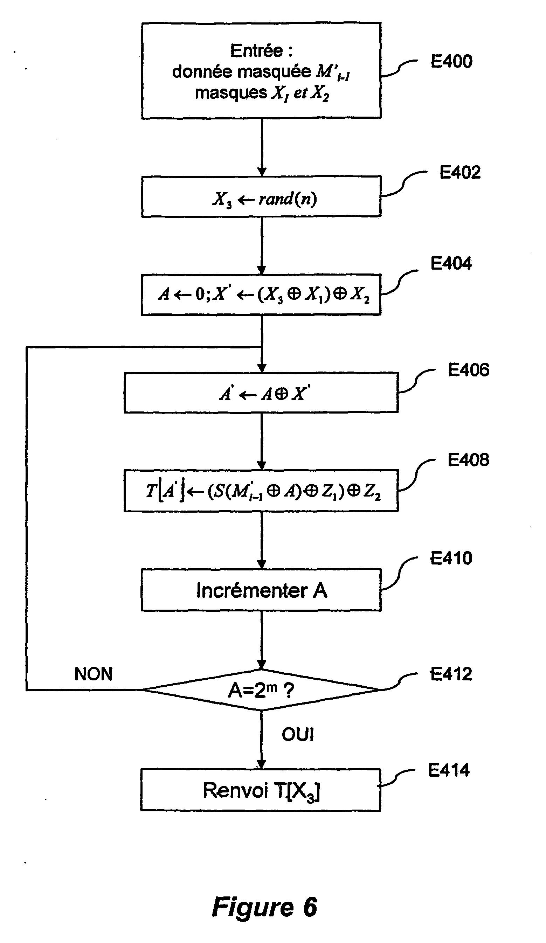

On a représenté à la figure 6 un troisième mode de réalisation envisageable pour l'étape E110 de la figure 3.

Ce mode de réalisation correspond au cas où la donnée $M_{i-1}$ est masquée au second ordre, c'est-à-dire par l'utilisation de deux masques $X_1$ et $X_2$ et où la valeur masquée $M'_{i-1}$ vaut donc $M_{i-1} \oplus X_1 \oplus X_2$.

Dans ce cas, on reçoit en entrée à l'étape E400 la donnée masquée $M'_{i-1}$ ainsi que les deux masques $X_1$ et $X_2$.

Selon ce mode de réalisation, on procède tout d'abord à l'étape E402 au tirage aléatoire d'une valeur $X_3$, valeur qui consiste en un nombre de même nombre de bits m que les masques $X_1$ et $X_2$ (d'où la notation rand(m)).

On procède alors à une étape d'initialisation E404 à laquelle on met à la valeur nulle une variable A. On peut également calculer à cette étape E404 en vue d'une simplification des calculs une valeur X' égale à la valeur aléatoire précédemment déterminée $X_3$ masquée successivement par les masques $X_1$ et $X_2$, soit $X' = (X_3 \oplus X_1) \oplus X_2$.

Dans cette étape, on veille à réaliser les opérations de ou-exclusif (XOR) dans l'ordre des parenthèses, à savoir d'abord $X_3 \oplus X_1$, puis l'addition du résultat avec $X_2$. En effet, en respectant cet ordre, on garantit une protection contre les attaques d'ordre 2 puisque l'on ne manipule pas directement la valeur $X_1 \oplus X_2$ qui pourrait alors s'apparenter à un simple masquage (au premier ordre) de la donnée $X_3$.

Une fois cette étape d'initialisation réalisée, on procède à l'étape E406 où on détermine une valeur intermédiaire A' par application de la variable A à la valeur X' en vue de son démasquage, c'est-à-dire ici par l'opération $A \oplus X'$ (puisque, comme déjà vu à propos du premier mode de réalisation, l'opération de masquage et de démasquage est ici réalisée par la seule et même opération de somme booléenne).

On procède alors à l'étape E408 à laquelle on commence par lire dans la table de conversion S la valeur de sortie associée à la valeur d'entrée $M'_{i-1} \oplus A$, c'est-à-dire la valeur de sortie correspondant à la donnée masquée $M'_{i-1}$ transformée par application de la variable A au moyen de l'opération de démasquage.

La valeur de sortie ainsi obtenue S $M'_{i-1} \oplus A$) est alors successivement masquée par deux masques $Z_1$ et $Z_2$ afin d'obtenir un masquage du second ordre.

Comme pour le premier mode de réalisation, les nouveaux masques $Z_1$ et $Z_2$ peuvent être passés en argument (c'est-à-dire en entrée) à l'étape E400, ou en variante être déterminés à- l'étape d'initialisation E404 (auquel cas ils sont également retournés à l'étape E414 décrite plus bas).

Afin d'éviter des fuites au second ordre susceptibles d'être détectées, on procède comme indiqué successivement au masquage à l'aide de la valeur $Z_1$, puis dans une seconde phase au masquage à l'aide de la valeur $Z_2$.

La valeur obtenue en sortie après masquage est enfin écrite au cours de cette même étape E408 dans un tableau T à une position définie par la valeur intermédiaire A' (dont on rappelle qu'elle résulte de l'application à la valeur aléatoire déterminée $X_3$ successivement d'un masquage par les masques $X_1$, $X_2$ puis de l'application de l'opération de démasquage avec la variable A à l'étape E406).

On procède ensuite à l'étape E410 à laquelle on incrémente la variable A, puis on teste à l'étape E412 si la valeur A a atteint la valeur maximale possible pour les masques (ici $2^m$).

En cas de réponse négative, on retourne à l'étape E406 afin de réitérer les étapes E406 et E408 avec toutes les valeurs envisageables pour A.

Enfin, en cas de réponse positive, on renvoie à l'étape E414 la valeur $T[X_3]$ correspondant à la donnée mémorisée dans le tableau T à la position définie par la valeur aléatoire $X_3$ tirée à l'étape E402.

En effet, le tableau T a été rempli en sa position $X_3$ à l'itération de l'étape E408 correspondant à une valeur A qui a permis le démasquage effectif du masquage de $X_3$ par les masques $X_1$ et $X_2$ à l'étape E404 : c'est donc l'itération pour laquelle la valeur A a également permis de démasquer la valeur $M'_{i-1}$ en la valeur $M_{i-1}$ dont on cherchait justement à connaître la sortie dans la table de conversion S.

Ce mode de réalisation permet ainsi d'obtenir les avantages mentionnés précédemment pour les modes de réalisation décrits aux figures 4 et 5 dans le cadre d'un masquage du second ordre.

Quel que soit le mode de réalisation envisagé ci-dessus, l'architecture matérielle des équipements électroniques, tels que le microcircuit 10, impose parfois l'utilisation de mots machine sur un nombre de bits déterminés, par exemple 8 bits, 16 bits ou 32 bits. Ainsi, lorsque les données de sortie sont des mots d'un nombre inférieur de bits, par exemple 4 bits, on mémorise plusieurs mots de sortie S(M) dans un seul mot machine de la table de conversion.

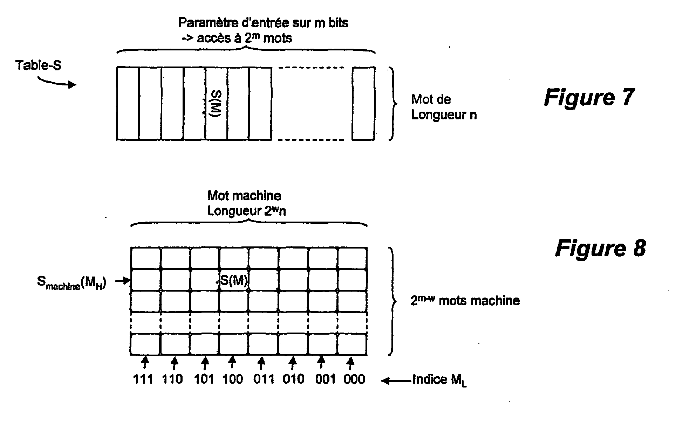

Les **figures 7** et **8** illustrent cette réalisation pratique. Sur la **figure 7**, on observe la table S utilisée ci-dessus présentant $2^m$ mots de sortie de longueur *n*. Sur la **figure 8**, la réalisation pratique mémorise les mots de sortie de longueur *n*, ici 2 bits, sur des mots machines de longueur $2^w n$, ici 16 bits (w est alors égal à 3). Le stockage de l'ensemble des mots de sortie S(M) ne requiert alors que l'utilisation de $2^{m-w}$ mots machines, stockant chacun respectivement $2^w$ mots de sortie S(M) (également appelés par la suite "sous-mots"). On obtient ainsi un stockage en mémoire efficace. La table ainsi formée comprend $2^{m-w}$ mots de longueur $2^w n$.

Les mots de sortie sont mémorisés de sorte qu'on accède au mot S(M) en sélectionnant un mot machine $S_{machine}(M_H)$ à partir des m-w bits les plus significatifs de M (notés pour la suite $M_H$) et en récupérant le sous-mot du mot sélectionné à partir des w bits les moins significatifs de M (ci-après notés $M_L$). Notamment $S_{machine}(M_H) = \{S(M_H, 0), S(M_H,1), ..., S(MH,2^w-1)\}$.

Une autre convention qui décompose le mot M peut également être envisagée, par exemple sélectionner le mot machine à partir des bits centraux de M et sélectionner le sous-mot à partir de bits extrêmes de M (par exemple les deux bits de poids fort et le bit de poids faible).

Au vu de ce qui précède, on peut lire le mot machine $S_{machine}(M_H)$ de manière sécurisée en appliquant les algorithmes, évoqués ci-dessus en lien avec les **figures 4** à **6**, aux parties de poids fort de M' et de son masque X.

On récupère ainsi $S_{machine}(M_H)$ éventuellement masqué, en fonction de $M'_{i-1,H}$, $A_H$ ou $X_H$ (éventuellement $X_{1,H}$ et $X_{2,H}$ lors du double masquage) (l'indice H représentant les m-w bits les plus significatifs).

Sans masquage de sortie, on récupère $S_{machine}(M_H)$.

Avec un masquage de sortie simple à l'aide du masque Z, on récupère $S_{machine}(M_H) \oplus Z$ (Z de longueur m-w).

Avec un masquage de sortie double à l'aide des masques $Z_1$ et $Z_2$, on récupère $S_{machine}(M_H) \oplus Z_1 \oplus Z_2$ ($Z_1$ et $Z_2$ de longueur m-w).

Des ordres de masquage supérieurs peuvent également être envisagés sans complexifier les mécanismes décrits par la suite.

De l'autre côté, on dispose de $M'_{i-1,L}$, $X_L$ (éventuellement $X_{1,L}$ et $X_{2,L}$ lors du double masquage) qui correspondent aux bits d'identification du mot de sortie à l'intérieur du mot machine $S_{machine}(M_H)$, éventuellement masqué, lu dans le tableau T selon les algorithmes ci-dessus.

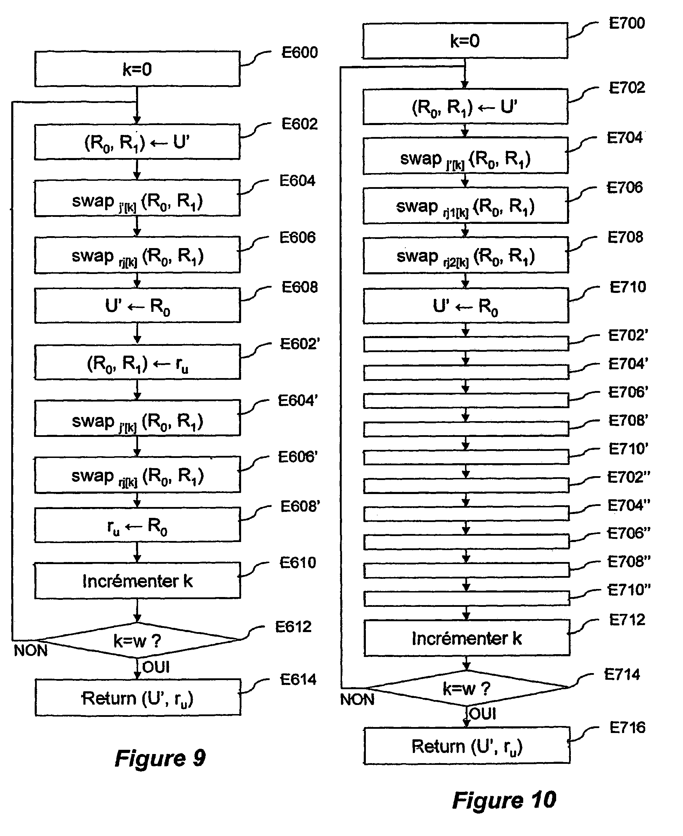

On décrit maintenant, en référence aux **figures 9** à **11**, différents mécanismes permettant d'extraire efficacement, et éventuellement en toute sécurité eu égard aux degrés de masquage, le sous-mot (donc le mot de sortie) d'indice $M_{i-1,L}$ du mot machine $S_{machine}(M_H)$ éventuellement masqué en sortie, à partir de l'indice masqué $M'_{i-1,L}$ et des masques $A_L$ ou $X_L$ et éventuellement $X_{1,L}$ et $X_{2,L}$.

Pour simplifier la notation, on note désormais U (ou U' si masqué) le mot machine, j' l'indice masqué, $r_j$ ($r_j1$ et $r_j2$) les masques de l'indice, $r_u$ ($r_u1$ et $r_u2$) les masques de sorties masquant éventuellement le mot machine U'. On cherche désormais à extraire le sous-mot U(j) à partir de j'et des masques de j' (ou extraire U'(j) et les masques de

sorties correspondant notés $s_u$ ($s_u1$ et $s_u2$)), c'est-à-dire sans manipuler j pour des questions de sécurité.

Ces différents mécanismes concernent généralement l'accès à un sous-mot d'indice j dans un mot binaire (U, U') formé de $2^w$ sous-mots {U(0), ..., U($2^w$-1)} à partir de l'indice binaire j' masqué par un masque binaire correspondant $r_j$, comprenant

i) une étape de séparation dudit mot (U, U') en deux moitiés ($H_0$(U), $H_1$(U), $U_H$, $U_L$) respectivement des bits les plus significatifs et des bits les moins significatifs,
ii) au moins une étape de sélection d'une moitié dudit mot (U, U') en fonction des valeurs des bits de même index dans respectivement l'indice j' et le masque $r_j$.

En effet, on remarque que selon la valeur du bit de poids fort de j, le sous-mot auquel on veut accéder est soit dans la partie gauche (c'est-à-dire de poids fort), soit dans la partie droite (c'est-à-dire de poids faible) de U. Ainsi, en combinant l'utilisation des bits respectifs de l'indice masqué et de son masque (c'est-à-dire des bits contribuant à obtenir le bit correspondant de l'indice j non masqué), on sélectionne efficacement la partie du mot d'intérêt, sans manipuler l'indice j non masqué.

En particulier, on choisira des sous-mots de même longueur.

On illustre une première réalisation de ces mécanismes à l'aide du mot U=1010011101101101 composé de 8 sous-mots d'indice allant de 000 (sous-mot de poids fort - à gauche) à 111 (sous-mot de poids faible - à droite), en s'appuyant sur la **figure 9**. Plus précisément, on souhaite accéder au sous-mot dont l'indice masqué j' vaut 101 et son masque $r_j$ 111 (on rappelle j'=j⊕$r_j$). On remarque que j=101⊕111=010, donc on souhaite accéder au sous-mot 01 composé des 5è et 6è bits de U en partant de la gauche.

Cette réalisation met en oeuvre les étapes algorithmiques suivantes:

$$
\begin{aligned}
&\textbf{for } k=0 \textbf{ to } w\text{-}1 \\
&\quad (R_0, R_1) \leftarrow U \\
&\quad \text{swap}_{j'[k]}(R_0, R_1) \\
&\quad \text{swap}_{rj[k]}(R_0, R_1) \\
&\quad U \leftarrow R_0 \\
&\textbf{return } R_0
\end{aligned}
$$

où $R_0$ et $R_1$ sont deux registres de longueur au moins égale à la demi-longueur de U, ici au moins 8 bits, et $\text{swap}_b(R_0, R_1)$ est une fonction qui intervertit le contenu des deux registres lorsque b=0:

$$swap_b(R_0, R_1) = \begin{cases} NOP & si \quad b = 0 \\ swap(R_0, R_1) & si \quad b = 1 \end{cases}.$$

Une telle fonction $swap_b$ peut être mise en oeuvre par les étapes suivantes:

$tmp \leftarrow R_1$
$R_b \leftarrow R_0$
$R_{\bar{b}} \leftarrow tmp$

En alternative, $swap_b$ peut être mise en oeuvre à l'aide de la fonction Rotate(R,x) qui effectue une rotation de R sur x bits à droite ou à gauche, par $swap_b$($R_0$, $R_1$)=Rotate(($R_0$, $R_1$), l+b.l) où l est la longueur des registres. Ici, on utilisera un seul registre R composé des deux parties égales $R_0$ et $R_1$, afin que le décalage de bits décale potentiellement les bits d'une partie du registre R à l'autre.

En alternative à l'utilisation de deux registres, il est possible d'utiliser un registre double (longueur 2l, ici au moins 16 bits) constitué de deux parties.

A l'étape E600, on initialise un compteur k à 0.

A l'étape E602, on affecte aux deux registres $R_0$ et $R_1$, respectivement $U_H$ (10100111) et $U_L$ (01101101).

A l'étape E604, on applique la fonction *swap$_b$* en fonction du bit le plus significatif de l'indice j'={j'[0], j'[1], ..., j'[w-1]}:

$$j'[k=0]=1.$$

Ici, on intervertit alors les deux registres: $R_0$ = 01101101 et $R_1$ = 10100111.

A l'étape E606, on applique de nouveau la fonction *swap$_b$* en fonction du bit de même index k, donc le plus significatif, du masque $r_j$: $r_j$[k=0]=1.

Ici, on intervertit alors les deux registres: $R_0$ = 10100111 et $R_1$ = 01101101.

A l'étape E608, on remplace la valeur de U par le contenu du registre $R_0$.

A l'étape E610, on incrémente la valeur d'itération k: k=1.

A l'étape E612, on compare k avec w (ici w=3). Comme k<3, on retourne à l'étape E602 en répartissant la nouvelle valeur de U dans les deux registres: $R_0$ = 1010 et $R_1$ = 0111.

Comme j'[k=1]=0 et $r_j$[k=1]=1, on effectue une seule permutation des deux registres lors de l'étape E606: $R_0$ = 0111 et $R_1$ = 1010.

On conserve ainsi à l'étape E608, U=0111.

A l'étape E612, k=2, donc on retourne à l'étape E602.

L'itération k=2 mène à $R_0$ = 01 et $R_1$ = 11 car deux permutations ont été effectuées aux étapes E604 et E606.

A l'étape E612, k=3=w, donc on passe à l'étape E614 par laquelle on retourne U=01. On obtient bien le sous-mot attendu.

On remarque qu'à chaque itération, la taille de U diminue de moitié et on converge ainsi par dichotomie vers le sous-mot souhaité.

La sécurité de ce mécanisme est assurée par l'application des fonctions de permutation (inversion des deux registres) à toutes les itérations (avec des paramètres différents) même si aucune permutation n'en découle.

D'une façon générale, l'opération de permutation (*swap*) telle qu'envisagée ci-dessus confère, lorsqu'elle est utilisée de façon conditionnelle, un degré de sécurité élevé lorsqu'il s'agit d'identifier (par exemple pour sélection ou isolation) un élément parmi deux. A ce titre, il pourra être envisagé une protection de cette approche indépendante des autres enseignements décrits dans la présente demande.

On peut noter qu'en utilisant une indexation de j' (et de ses masques) non plus de gauche à droite mais de droite à gauche, il y a lieu de procéder à une permutation (swap) supplémentaire à l'intérieur de chacune des itérations k.

Afin de fournir une protection d'ordre 1 de masquage des données, le mode de réalisation décrit ci-dessus peut être étendu à la donnée U' masquée à l'aide d'un masque aléatoire $r_u$. Dans ce cas, on cherche à déterminer non seulement le sous-mot de U' (comme décrit ci-dessus) qui convient mais également le sous-mot de $r_u$ correspondant.

L'accès au sous-mot $r_u$(j) à partir du mot machine $r_u$ est similaire au mécanisme ci-dessus.

Dans chacune des itérations k, on réalise juste après l'étape E608, des étapes E602', E604', E606' et E608' appliquées au masque $r_u$, similaires à celles de numéro correspondant E602, E604, E606 et E608.

L'algorithme proposé ci-dessus, devient alors:

$$
\begin{aligned}
&\text{for } k=0 \text{ to } w-1 \\
&\quad (R_0, R_1) \leftarrow U' \\
&\quad swap_{j'[k]}(R_0, R_1) \\
&\quad swap_{r_j[k]}(R_0, R_1) \\
&\quad U' \leftarrow R_0 \\
&\quad (R_0, R_1) \leftarrow r_u \\
&\quad swap_{j'[k]}(R_0, R_1) \\
&\quad swap_{r_j[k]}(R_0, R_1) \\
&\quad r_u \leftarrow R_0 \\
&\text{return } (U', r_u)
\end{aligned}
$$

On obtient en fin d'algorithme (étape E614) les valeurs U' et $r_u$ correspondant aux sous-mots recherchés, telles que U' = U $\oplus$ $r_u$, où U est ta valeur de sortie (de la boîte S) non masquée.

On décrit maintenant en référence à la **figure 10**, une réalisation plus sécurisée mettant en oeuvre un double masquage des valeurs, aussi bien pour l'indice j' (masques $r_j1$ et $r_j2$) que pour le mot U' (masques $r_u1$ et $r_u2$), par exemple résultant de l'étape E414 ci-dessus appliquée à la détermination de $S_{machine}(M_H)$. Ces doubles masquages peuvent bien sûr être appliqués indépendamment.

Cette réalisation diffère, de celle de la **figure 9**, en substance par l'application de la fonction swap trois fois en fonction de bits correspondant dans l'indice j' et dans chacun des deux masques $r_j1$ et $r_j2$ (on s'aperçoit donc que l'invention peut être étendue sans difficulté à des ordres supérieurs de masquage en effectuant un nombre de permutations égal à 1 + nombre de masques de j) et par la détermination des sous-mots dans le mot U' et dans chacun des masques $r_u1$ et $r_u2$ de U. Pour une homogénéité de sécurité, il convient de choisir un même degré de masquage de l'indice j et du mot binaire U.

Les étapes E700 à E704 ne diffèrent pas des étapes E600 à E604.

Puisque l'on a deux masques d'indice $r_j1$ et $r_j2$, on effectue deux permutations conditionnelles aux étapes E706 et E708, indexées respectivement sur les deux bits correspondants des deux masques $r_j1[k]$ et $r_j2[k]$.

L'étape E710 est la même que l'étape E608 ci-dessus.

Dans la même itération, on calcule de façon similaire les deux parties de masques $r_u1$ et $r_u2$ correspondant, aux étapes E702' à E710' et E702" à E710".

A l'étape E712, on incrémente k de sorte à former w itérations (comparaison à l'étape E714).

A l'étape E716, on retourne U', $r_u1$ et $r_u2$ représentant les sous-mots souhaités (donc valeurs de sortie de la table S) des mots initiaux. Ces trois valeurs vérifient: U' = U $\oplus$ $r_u1$ $\oplus$ $r_u2$.

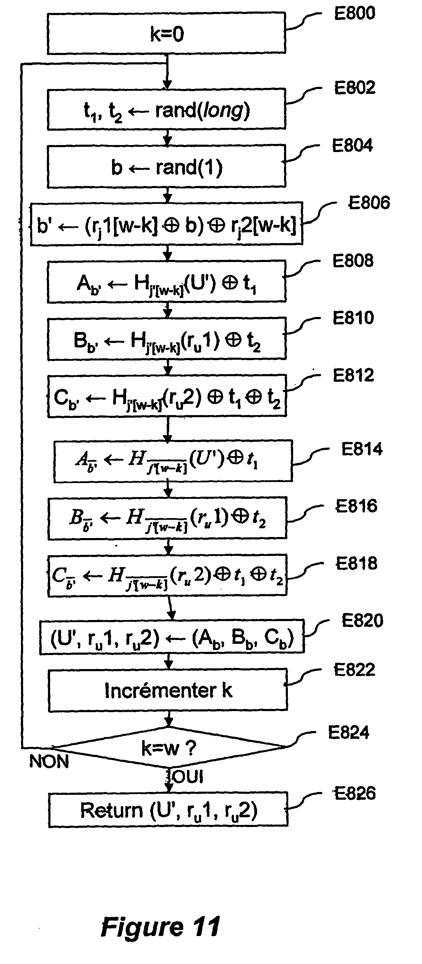

Afin d'accroître encore plus la sécurité, notamment en évitant d'utiliser les variables intermédiaires U' et U'(j) qui constituent une faiblesse potentielle du fait de la dépendance à l'indice j, on propose le mécanisme suivant en référence à la **figure 11.**

Bien que décrit à l'aide d'un double masquage, le mécanisme s'applique à un simple masquage voire en l'absence de masquage du mot U.

On définit tout d'abord les deux fonctions $H_0(y)$ et $H_1(y)$ qui retournent respectivement la moitié des bits les plus significatifs de y et la moitié des bits les moins significatifs de y. Ces deux fonctions sont aisément réalisables à l'aide de la fonction *swap$_b$* évoquée ci-dessus, par exemple comme suit:

$$H_b(y) : \quad (R_0, R_1) \leftarrow y$$
$$swap_b(R_0, R_1)$$
$$return\ R_0$$

Le mécanisme d'accès au sous-mot d'indice j peut être mis en oeuvre à l'aide des instructions suivantes:

```
for k=0 to w-1

    (U', r_u1, r_u2) ← Select (2^(w-1-k)n, (U', r_u1, r_u2), (j'[w-k], r_j1[w-k], r_j2[w-k]))

return (U', r_u1, r_u2)
```

où la fonction Select reçoit en paramètre une dimension long ($2^{w-1-k}n$ représentant la taille d'une moitié de mot U', $r_u1$ et $r_u2$ que l'on souhaite récupérer en fin d'itération considérée), un premier 3-uplet d'un mot masqué et des deux masques associés, et un deuxième 3-uplet d'un bit masqué (ici le bit d'index w-k de l'indice j) et des deux masques associés, et retourne un 3-uplet (U', $r_u1$, $r_u2$) vérifiant U' $\oplus$ $r_u1$ $\oplus$ $r_u2$ = $H_{j[w-k]}(U)$.

On voit ainsi qu'en itérant cette fonction pour chacun des bits composant l'indice j, on isole successivement les moitiés du mot correspondant aux différents bits de l'indice j pour aboutir au sous-mot de U' d'indice j accompagné des sous-mot des masques correspondants.

On note également que l'application de ce mécanisme à un masquage simple fait intervenir des 2-uplet et non plus des 3-uplet (extensible également à q masques et des q-uplets).

A l'étape E800, on initialise une valeur d'itération k à 0.

Les étapes E802 à E820 illustrent un exemple de réalisation de la fonction Select.

A l'étape E802, on génère deux masques aléatoires de longueur *long*=$2^{w-1-k}n$.

A l'étape E804, on génère un booléen b aléatoire.

A l'étape E806, on calcule un bit masqué à partir du booléen *b* et des bits d'index k (en partant du bit de poids le plus fort au bit de poids le plus faible au fur et à mesure des itérations) dans respectivement tes deux masques de l'indice j': b' ← (r$_j$1[w-k] ⊕ b) ⊕ r$_j$2[w-k]

Dans cette étape, on veille à réaliser les opérations XOR dans l'ordre des parenthèses, à savoir d'abord r$_j$1 [w-k] ⊕ b, puis l'addition du résultat avec le booléen r$_j$2[w-k]. En effet, en respectant cet ordre, on garantit une protection contre les attaques d'ordre 2 puisque l'on ne manipule pas directement la valeur r$_j$1[w-k] ⊕ r$_j$2[w-k] qui pourrait être vue comme un simple masque ne protégeant le bit j[w-k] que par un masquage d'ordre 1.

Pour les étapes suivantes E808 à E818 (qui peuvent être interverties entre elles car indépendantes), on utilise trois paires de registres adressables, ci-après notés A$_0$, A$_1$ (affectés au mot U), B$_0$, B$_1$ (affectés au premier masque de U), C$_0$ et C$_1$ (affectés au deuxième masque de U).

On affecte successivement:

- au registre A indexé par b' calculé à l'étape E806, la partie H$_{j'[w-k]}$(U') masqué par un (t$_1$) des masques aléatoires générés à l'étape E802:

$$A_{b'} \leftarrow H_{j'[w-k]}(U') \oplus t_1$$

- à l'autre registre A, l'autre partie de U' masquée par le même masque.

On procède de même pour les deux masques r$_u$1 et r$_u$2, qui utilisent respectivement l'autre masque t$_2$ et la combinaison des deux masques t$_1$ et t$_2$, et sont stockés par paire respectivement dans B$_0$, B$_1$, C$_0$ et C$_1$.

A ce stade, on pourrait démontrer que pour l'index 'w-k' ci-dessus, quelles que soient les valeurs des deux masques r$_j$1[w-k] et r$_j$2[w-k], on a:

$$(A_b, B_b, C_b) = (H_{j[w-k]}(U') \oplus t_1, H_{j[w-k]}(r_u1) \oplus t_2, H_{j[w-k]}(r_u2) \oplus t_1 \oplus t_2)$$

$$(A_{\bar{b}}, B_{\bar{b}}, C_{\bar{b}}) = (H_{\overline{j[w-k]}}(U') \oplus t_1, H_{\overline{j[w-k]}}(r_u1) \oplus t_2, H_{\overline{j[w-k]}}(r_u2) \oplus t_1 \oplus t_2)$$

et les valeurs stockées dans les registres vérifient:

$$A_b \oplus B_b \oplus C_b = H_{j[w-k]}(U).$$

Du fait de l'indépendance de ces valeurs à celles de r$_j$1 et r$_j$2, on obtient une indépendance par rapport à l'indice j, et donc une sécurité accrue.

Ainsi à l'étape E820, on substitue (A$_b$, B$_b$, C$_b$) aux valeurs précédentes (U', r$_u$1, r$_u$2).

On incrémente ensuite k, à l'étape E822.

On compare k et w pour déterminer si on met fin aux itérations, à l'étape E824 (similaire aux étapes E612 et E714 ci-dessus, avec retour à l'étape E802 pour une nouvelle itération).

A la fin des itérations (étape E826), on retourne (U', r$_u$1, r$_u$2) qui correspondent respectivement au sous-mot masqué recherché et aux deux sous-mots de masques qui permettent de démasquer le sous-mot U' obtenu: U' ⊕ r$_u$1 ⊕ r$_u$2 = U.

L'utilisation des paramètre aléatoire t$_1$, t$_2$ et b n'est pas indispensable. Elle fournit néanmoins un gage de sécurité de l'algorithme car permet, d'une part, de protéger les valeurs manipulées par un double masquage (t$_1$ et t$_2$, que l'on peut réduire à un simple masquage si nécessaire) et d'autre part, d'attribuer le résultat souhaité arbitrairement dans l'un ou l'autre des deux registres indexés sur b. En l'absence de b, on retourne à l'étape E826 Ao, B$_0$ et C$_0$. En l'absence de t$_1$ et t$_2$, le paramètre *long* n'est pas nécessaire dans la fonction Select indiqué ci-dessus.

Dans les mécanismes ci-dessus en lien avec les figures 9 à 11, les valeurs j'[k], r$_j$[k], r$_j$1[k] et r$_j$2[k] jouent des rôles symétriques de telle sorte qu'il est envisageable d'intervertir leurs positions dans ces mécanismes, par exemple le valeur b' à l'étape E806 peut utiliser j' au lieu du masque r$_j$1 et les fonctions H des étapes E808 et E814 sont alors indexées par le masque r$_j$1.

Grâce à ces mécanismes, on accède de façon sécurisé à sous-mot d'un mot notamment masqué, composé d'une pluralité de sous-mots, à l'aide d'un indice également masqué.

Les exemples qui précèdent ne sont que des modes de réalisation de l'invention qui ne s'y limite pas.

**Revendications**

1. Procédé de traitement cryptographique de données représentées sous forme numérique, le procédé étant mis en oeuvre par une entité électronique (10) et comprenant une transformation (E110) d'une donnée d'entrée ($M'_{i-1}$), masquée par un masque d'entrée ($X$ ; $X_1 \oplus X_2$), en une donnée de sortie ($M'_i$), ladite transformation mettant en oeuvre une table de conversion (S), **caractérisé par** les étapes suivantes :

   - pour au moins une pluralité de valeurs possibles (A) pour le masque d'entrée, transfert de la valeur de sortie de la table de conversion (S) correspondant à la donnée d'entrée masquée ($M'_{i-1}$) transformée par application d'une opération de démasquage au moyen de la valeur possible (A), dans un tableau (T) à une position correspondant à une valeur déterminée (0; Y; $X_3$) masquée par le masque d'entrée et transformée par application de l'opération de démasquage au moyen de la valeur possible ;
   - détermination de la donnée de sortie au moyen de la donnée située dans le tableau (T) à la position correspondant à la valeur déterminée (0; Y; $X_3$).

2. Dispositif électronique de traitement cryptographique de données représentées sous forme numérique, apte à réaliser une transformation d'une donnée d'entrée, masquée par un masque d'entrée, en une donnée de sortie au moyen d'une table de conversion, **caractérisé par** :

   - des moyens pour transférer, pour au moins une pluralité de valeurs possibles pour le masque d'entrée, la valeur de sortie de la table de conversion correspondant à la donnée d'entrée masquée transformée par application d'une opération de démasquage au moyen de la valeur possible, dans un tableau à une position correspondant à une valeur déterminée masquée par le masque d'entrée et transformée par application de l'opération de démasquage au moyen de la valeur possible ;
   - des moyens pour déterminer la donnée de sortie au moyen de la donnée située dans le tableau à la position correspondant à la valeur déterminée.

3. Dispositif électronique selon la revendication 2, dans lequel la table de conversion définit une fonction non linéaire (F).

4. Dispositif électronique selon la revendication 2 ou 3, dans lequel le masque d'entrée est un masque du premier ordre.

5. Dispositif électronique selon la revendication 2 ou 3, dans lequel le masque d'entrée est un masque du second ordre.

6. Dispositif électronique selon la revendication 5, comprenant:

   - des moyens de masquage de la valeur déterminée par un premier élément de masque ($X_1$);
   - des moyens de masquage de la valeur déterminée par un second élément de masque ($X_2$).

7. Dispositif électronique selon l'une des revendications 2 à 6, dans lequel les moyens pour transférer comprennent des moyens de masquage de la valeur transférée par un masque de sortie ($Z$ ; $Z_1$, $Z_2$).

8. Dispositif électronique selon la revendication 7, dans lequel le masque de sortie est un masque du second ordre.

9. Dispositif électronique selon la revendication 8, dans lequel les moyens de masquage comprennent :

   - des premiers sous-moyens de masquage par une première valeur aléatoire ($Z_1$);
   - des seconds sous-moyens de masquage par une seconde valeur aléatoire ($Z_2$).

10. Dispositif électronique selon l'une des revendications 2 à 9, dans lequel les moyens pour transférer agissent pour l'ensemble des valeurs possibles pour le masque d'entrée.

11. Dispositif électronique selon l'une des revendications 2 à 10, dans lequel la valeur déterminée est une valeur prédéterminée.

12. Dispositif électronique selon l'une des revendications 2 à 10, comprenant des moyens pour obtenir la valeur déterminée par tirage aléatoire.

13. Dispositif électronique selon l'une des revendications 2 à 12, dans lequel le ou les masques $(X; X_1, X_2; Z; Z_1, Z_2)$ sont des masques additifs

14. Dispositif électronique selon la revendication précédente, dans lequel le ou les masques sont des masques booléens.

15. Dispositif selon l'une des revendications 2 à 14, dans lequel ladite donnée située dans le tableau est un mot comprenant une pluralité de sous-mots de sortie et dans lequel les moyens de détermination de la donnée de sortie comprennent des moyens d'accès à la donnée de sortie parmi les sous-mots au moyen d'une partie de la donnée d'entrée $(M'_L)$ et d'une partie du masque d'entrée.

16. Dispositif selon la revendication 15, dans lequel les moyens d'accès à la donnée de sortie dans ledit mot comprennent :

   i) des moyens de séparation dudit mot (U, U') en deux moitiés $(H_0(U), H_1(U), U_H, U_L)$ respectivement des bits les plus significatifs et des bits les moins significatifs,
   ii) des moyens de sélection d'une desdites moitiés dudit mot (U, U') en fonction des valeurs des bits d'un même index dans respectivement la partie de la donnée d'entrée $(M'_L, j')$ et la partie du masque d'entrée $(rj, r_j1, r_j2)$.

17. Carte à microcircuit comprenant un dispositif électronique selon l'une des revendications 2 à 16.

18. Produit programme d'ordinateur comprenant une suite d'instructions aptes, lorsqu'elles sont exécutées par un microprocesseur, à mettre en oeuvre un procédé selon la revendication 1.

**Claims**

1. Method of cryptographic processing of data represented in digital form, the method being executed by an electronic entity (10) and comprising a transformation (E110) of an input data item $(M'_{i-1})$ masked by an input mask $(X; X_1 \oplus X_2)$ into an output data item $(M'_i)$, said transformation using a conversion table (S), **characterised by** the following steps:

   - for at least one plurality of possible values (A) for the input mask, transfer of the output value from the conversion table (S) corresponding to the masked input data item $(M'_{i-1})$ transformed by application of a demasking operation by means of the possible value (A) into a table (T) at a position corresponding to a particular value $(0; Y; X_3)$ masked by the input mask and transformed by application of the demasking operation by means of the possible value;
   - determination of the output data item by means of the data item situated in the table (T) at the position corresponding to the particular value $(0; Y; X_3)$.

2. Electronic device for cryptographic processing of data represented in digital form, adapted to effect a transformation of an input data item masked by an input mask into an output data item by means of a conversion table, **characterised by**:

   - means for transferring, for at least one plurality of possible values for the input mask, the output value from the conversion table corresponding to the masked input data item transformed by application of a demasking operation by means of the possible value, into a table at a position corresponding to a particular value masked by the input mask and transformed by application of the demasking operation by means of the possible value;
   - means for determining the output data item by means of the data item situated in the table at the position corresponding to the particular value.

3. Electronic device according to claim 2, wherein the conversion table defines a non-linear function (F).

4. Electronic device according to claim 2 or 3, wherein the input mask is a first order mask.

5. Electronic device according to claim 2 or 3, wherein the input mask is a second order mask.

**6.** Electronic device according to claim 5, comprising:

- means for masking the particular value by a first mask element ($X_1$);
- means for masking the particular value by a second mask element ($X_2$).

**7.** Electronic device according to any of claims 2 to 6, wherein the transfer means comprise means for masking the transferred value by an output mask ($Z; Z_1, Z_2$).

**8.** Electronic device according to claim 7, wherein the output mask is a second order mask.

**9.** Electronic device according to claim 8, wherein the masking means comprise:

- first masking sub-means using a first random value ($Z_1$);
- second masking sub-means using a second random value ($Z_2$).

**10.** Electronic device according to any of claims 2 to 9, wherein the transfer means act for all of the possible values for the input mask.

**11.** Electronic device according to any of claims 2 to 10, wherein the particular value is a predetermined value.

**12.** Electronic device according to any of claims 2 to 10, comprising means for obtaining the particular value by random drawing.

**13.** Electronic device according to any of claims 2 to 12, wherein the masks or masks ($X; X_1, X_2; Z; Z_1, Z_2$) are additive masks.

**14.** Electronic device according to the preceding claim, wherein the mask or masks are Boolean masks.

**15.** Device according to any of claims 2 to 14, wherein said data items situated in the table is a word comprising a plurality of output sub-words and wherein the means for determination of the output data item comprise means for access to the output data item among the sub-words by means of a portion of the input data item ($M'_L$) and a portion of the input mask.

**16.** Device according to claim 15, wherein the means for access to the output data item in said word comprise:

i) means for separation of said word ($U, U'$) into two halves ($H_0 (U), H_1 (U), U_H, U_L$) of the more significant bits and the less significant bits, respectively,
ii) means for selection of one of said halves of said word ($U, U'$) as a function of the values of the bits with the same index in the portion of the input data item ($M'_L, j'$) and the portion of the input mask ($rj, r_j1, r_j2$), respectively.

**17.** Microcircuit card comprising an electronic device according to any of claims 2 to 16.

**18.** Computer program product comprising a series of instructions adapted, when they are executed by a microprocessor, to execute a method according to claim 1.


**Patentansprüche**

**1.** Verfahren für die kryptografische Verarbeitung digital dargestellter Daten, wobei das Verfahren von einer elektronischen Einheit (10) ausgeführt wird und eine Transformation (E110) einer Eingabegröße ($M'_{i-1}$), die von einer Eingabemaske ($X; X_1 \oplus X_2$) maskiert wird, in eine Ausgabegröße ($M'_i$) umfasst, wobei die Transformation eine Konvertierungstabelle (S) anwendet, **gekennzeichnet durch** folgende Schritte:

- für mindestens mehrere mögliche Werte (A) für die Eingabemaske das Übertragen des Ausgabewertes der Konvertierungstabelle (S) entsprechend der maskierten Eingabegröße ($M'_{i-1}$), die **durch** Anwendung eines Demaskierungsvorganges mittels des möglichen Wertes (A) transformiert wird, in eine Tabelle (T) an eine Position entsprechend einem bestimmten Wert ($0; Y; X_3$), der von der Eingabemaske maskiert und **durch** Anwendung des Demaskierungsvorganges mittels des möglichen Wertes transformiert wird;

- Bestimmen der Ausgabegröße mittels der Größe, die sich in der Tabelle (T) an der Position entsprechend dem bestimmten Wert (0; Y; $X_3$) befindet.

2. Elektronische Einrichtung für die kryptografische Verarbeitung digital dargestellter Daten, die imstande ist, eine Transformation einer Eingabegröße, die von einer Eingabemaske maskiert wird, in eine Ausgabegröße mittels einer Konvertierungstabelle auszuführen, **gekennzeichnet durch**:

- für mindestens mehrere mögliche Werte für die Eingabemaske, Mittel zum Übertragen des Ausgabewertes der Konvertierungstabelle entsprechend der maskierten Eingabegröße, die **durch** Anwendung eines Demaskierungsvorganges mittels des möglichen Wertes transformiert wird, in eine Tabelle an eine Position entsprechend einem bestimmten Wert, der von der Eingabemaske maskiert und **durch** Anwendung des Demaskierungsvorganges mittels des möglichen Wertes transformiert wird;
- Mittel zum Bestimmen der Ausgabegröße mittels der Größe, die sich in der Tabelle an der Position entsprechend dem bestimmten Wert befindet.

3. Elektronische Einrichtung nach Anspruch 2, wobei die Konvertierungstabelle eine nichtlineare Funktion (F) definiert.

4. Elektronische Einrichtung nach Anspruch 2 oder 3, wobei die Eingabemaske eine Maske ersten Ranges ist.

5. Elektronische Einrichtung nach Anspruch 2 oder 3, wobei die Eingabemaske eine Maske zweiten Ranges ist.

6. Elektronische Einrichtung nach Anspruch 5, umfassend:

- Mittel zum Maskieren des bestimmten Wertes durch ein erstes Maskenelement ($X_1$);
- Mittel zum Maskieren des bestimmten Wertes durch ein zweites Maskenelement ($X_2$).

7. Elektronische Einrichtung nach einem der Ansprüche 2 bis 6, wobei die Mittel zum Übertragen Mittel zum Maskieren des übertragenen Wertes durch eine Ausgabemaske (Z; $Z_1$, $Z_2$) umfassen.

8. Elektronische Einrichtung nach Anspruch 7, wobei die Ausgabemaske eine Maske zweiten Ranges ist.

9. Elektronische Einrichtung nach Anspruch 8, wobei die Mittel zum Maskieren Folgendes umfassen:

- erste Untermittel zum Maskieren durch einen ersten Zufallswert ($Z_1$);
- zweite Untermittel zum Maskieren durch einen zweiten Zufallswert ($Z_2$).

10. Elektronische Einrichtung nach einem der Ansprüche 2 bis 9, wobei die Mittel zum Übertragen für die Gesamtheit der möglichen Werte für die Eingabemaske agieren.

11. Elektronische Einrichtung nach einem der Ansprüche 2 bis 10, wobei der bestimmte Wert ein vorausbestimmter Wert ist.

12. Elektronische Einrichtung nach einem der Ansprüche 2 bis 10, umfassend Mittel zum Erhalten des bestimmten Wertes durch Zufallsziehung.

13. Elektronische Einrichtung nach einem der Ansprüche 2 bis 12, wobei die Maske oder die Masken (X; $X_1$, $X_2$; Z; $Z_1$, $Z_2$) Zusatzmasken sind.

14. Elektronische Einrichtung nach dem vorhergehenden Anspruch, wobei die Maske oder die Masken boolesche Masken sind.

15. Einrichtung nach einem der Ansprüche 2 bis 14, wobei die Größe, die sich in der Tabelle befindet, ein Wort ist, das mehrere Ausgabeunterwörter umfasst, und wobei die Mittel zur Bestimmung der Ausgabegröße Zugangsmittel zur Ausgabegröße unter den Unterwörtern mittels eines Teils der Eingabegröße ($M'_L$) und eines Teils der Eingabemaske umfassen.

16. Einrichtung nach Anspruch 15, wobei die Zugangsmittel zur Ausgabegröße im Wort Folgendes umfassen:

i) Mittel zum Trennen des Wortes (U, U') in zwei Hälften ($H_0(U)$, $H_1(U)$, $U_H$, $U_L$) der jeweils signifikantesten Bits und der am wenigsten signifikanten Bits,
ii) Mittel zum Auswählen einer der Hälften des Wortes (U, U') in Abhängigkeit der Werte der Bits desselben Index jeweils im Teil der Eingabegröße ($M'_L$, j') und im Teil der Eingabemaske (rj, $r_j1$, $r_j2$).

17. Chipkarte, umfassend eine elektronische Einrichtung nach einem der Ansprüche 2 bis 16.

18. Computersoftwareprodukt, umfassend eine Folge von Befehlen, die, wenn sie von einem Mikroprozessor ausgeführt werden, imstande sind, ein Verfahren nach Anspruch 1 umzusetzen.

**Figure 1**

**Figure 2**

Réception message M — E100

Tirage nombre aléatoire X — E102

Masquage M :
$M' = M \oplus X$ — E104

Transformation initiale
$M'_0 = M' \oplus K_0$ — E106

i=1 — E108

ROUND i {

E110 — Transformation non linéaire

E112 — Autres transformations $\rightarrow M'_i$

E114 — Incrémentation de $i$

E116 — i=n ? — Non

Oui

Transformation finale :
$M'_{n-1} = M'_n \, avec \, K_n$ — E118

Démasquage :
$M_n = M'_n \oplus X$ — E120

Emission $M_n$ — E122

*Figure 3*

Entrée :
donnée masquée $M'_{i-1}$
masque $X$ — E200

$A \leftarrow 0$ — E202

$T[A \oplus X] \leftarrow S(M'_{i-1} \oplus A) \oplus Z$ — E205

Incrémenter A — E208

NON — A=2$^m$ ? — E210

OUI

Renvoi T[0] — E212

**Figure 4**

Entrée :
donnée masquée $M'_{i-1}$
masque $X$ — E300

$A \leftarrow 0 ; Y \leftarrow rand(n)$ — E302

$Y' \leftarrow Y \oplus X$ — E304

$T[A \oplus Y'] \leftarrow S(M'_{i-1} \oplus A) \oplus Z$ — E305

Incrémenter A — E308

NON — A=2$^m$ ? — E310

OUI

Renvoi T[Y] — E312

**Figure 5**

**Figure 6**

Paramètre d'entrée sur m bits
-> accès à $2^m$ mots

Table-S

S(M)

Mot de
Longueur n

*Figure 7*

Mot machine
Longueur $2^w n$

$S_{machine}(M_H)$ →

S(M)

$2^{m-w}$ mots machine

*Figure 8*

111  110  101  100  011  010  001  000  ◄—— Indice $M_L$

E700 — k=0

E702 — $(R_0, R_1) \leftarrow U'$

E704 — swap $_{j'[k]}$ $(R_0, R_1)$

E706 — swap $_{rj1[k]}$ $(R_0, R_1)$

E708 — swap $_{rj2[k]}$ $(R_0, R_1)$

E710 — $U' \leftarrow R_0$

E702'

E704'

E706'

E708'

E710'

E702''

E704''

E706''

E708''

E710''

E712 — Incrémenter k

E714 — k=w ?    NON    OUI

E716 — Return $(U', r_u)$

**Figure 10**

E600 — k=0

E602 — $(R_0, R_1) \leftarrow U'$

E604 — swap $_{j'[k]}$ $(R_0, R_1)$

E606 — swap $_{rj[k]}$ $(R_0, R_1)$

E608 — $U' \leftarrow R_0$

E602' — $(R_0, R_1) \leftarrow r_u$

E604' — swap $_{j'[k]}$ $(R_0, R_1)$

E606' — swap $_{rj[k]}$ $(R_0, R_1)$

E608' — $r_u \leftarrow R_0$

E610 — Incrémenter k

E612 — k=w ?    NON    OUI

E614 — Return $(U', r_u)$

**Figure 9**

*Figure 11*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007116140 A